# EUROPÄISCHE PATENTSCHRIFT

(11) **EP 1 316 418 B1**
(45) Veröffentlichungstag und Bekanntmachung des Hinweises auf die Patenterteilung: **05.10.2005**
(21) Anmeldenummer: 02026176.4
(22) Anmeldetag: 25.11.2002
(51) Int. Cl.: B32B 25/08, B32B 5/14

(54) **Monoaxial elastische Laminatfolie**
Uniaxial elastic laminate film
Film laminé élastique dans une seule direction

(30) Priorität: 28.11.2001 DE 10158345
(43) Veröffentlichungstag der Anmeldung: 04.06.2003
(73) Patentinhaber: Nordenia Deutschland Gronau GmbH, 48599 Gronau (DE)
(72) Erfinder: Hamulski, Markus, 48599 Gronau-Epe (DE); Hagemann, Andreas, 48249 Dülmen (DE); Perrick, Matthias, 48599 Gronau (DE)
(74) Vertreter: Albrecht, Rainer Harald

(56) Entgegenhaltungen:
- EP-A- 0 703 068
- US-A- 4 834 820
- US-A- 5 344 691
- US-A- 5 422 178
- US-A- 5 501 679
- US-A- 5 691 043

## Beschreibung

Die Erfindung betrifft eine monoaxial elastische Laminatfolie, die in einer bevorzugten Dehnungsrichtung elastisch dehnbar ist und quer zu dieser Dehnungsrichtung eine relativ feste und unelastische Struktur besitzt.

Monoaxial elastische Laminate werden beispielsweise für Einmal-Hygieneprodukte wie Windeln und Inkontinenzvorlagen verwendet, z. B. in den elastischen Bunden dieser Artikel (US-A 4 681 580). Für derartige Anwendungen wird streifenförmiges Material benötigt, welches in Längsrichtung um das zwei- oder mehrfache seiner Ursprungslänge dehnbar ist und in Querrichtung dazu eine hohe Formstabilität aufweist. Das Material soll sich möglichst wie konventionelle Gummibänder verhalten, die textiltechnisch als Gewirke mit eingewirkten Latexlitzen hergestellt werden. Derartige Gummibänder sind beispielsweise in H. Vavra, Grundlehre der Schneiderei, Verlag Otto Beyer, Leipzig, 1935, Seite 47 beschrieben.

Aus DE 197 15 938 A1 ist eine Laminatfolie bekannt, die eine Kernlage aus einem thermoplastischen Elastomer und Skinlagen aus einem spröden Material aufweist. Die elastische Kernlage ist z. B. mit Tackifiern klebrig gemacht. Die vorzugsweise beidseitig auf die Kernlage aufgebrachten Skinlagen bestehen aus einem spröde aushärtenden thermoplastischen Kunststoff und anorganischen Füllstoffen zur Förderung der Sprödigkeit des Materials. Im Rahmen der bekannten Maßnahmen wird die Laminatfolie mit einem Vliesstoff verbunden. Die zu verbindenden Bahnen werden einem Walzenpaar zugeführt und in dem Walzenspalt einer Druckbeanspruchung ausgesetzt. Durch die Druckbeaufschlagung zerfasert die Skinlage und wird der Vliesstoff mit der freigelegten klebrigen Oberfläche der Kernlage verbunden. Weder die Laminatfolie noch der aus Laminatfolie und Vliesstoff bestehende Verbund weisen die für die eingangs beschriebene Anwendung erforderlichen Eigenschaften eines konventionellen Gummibandes auf.

In DE 195 26 044 A1 ist eine flauschige Verbundfolie beschrieben, die eine Kernlage aus einem thermoplastischen Elastomer und mindestens eine zusammen mit der Kernlage coextrudierte Skinlage aus einer thermoplastischen, dehnbaren Kunststoff-Grundsubstanz und darin heterogen eingebundenen Zusatzstoffen-Teilchen aufweist. Die Verbundfolie wird nach ihrer Extrusion ein- oder mehrachsig gedehnt, wobei die Zusatzstoff-Teilchen sich an ihren Grenzbereichen von der sie umgebenden Kunststoff-Grundsubstanz lösen und sich zu einer flauschigen Oberfläche aufstellen, wenn die gedehnte Verbundfolie sich entspannt. Die bekannte Folie weist ebenfalls nicht die Eigenschaften eines Gummibandes auf, welches eine hohe Elastizität in einer bevorzugten Dehnungsrichtung besitzt und in Querrichtung dazu formstabil ist.

Der Erfindung liegt die Aufgabe zu Grunde, eine monoaxial elastische Laminatfolie anzugeben, die - ähnlich wie ein konventionelles Gummiband - eine hohe Elastizität in lediglich einer Achsrichtung aufweist und in der Querrichtung dazu eine relativ feste und unelastische Struktur besitzt.

Gegenstand der Erfindung und Lösung dieser Aufgabe ist eine monoaxial elastische Laminatfolie mit einer Kernlage aus einem thermoplastischen Elastomer und mindestens einer zusammen mit der Kernlage coextrudierten Skinlage,
wobei die Skinlage aus einem thermoplastischen Kunststoff mit einem spröde verfestigten Molekülverband besteht, der sich unter Anwendung einer Dehnkraft nur wenig dehnt und bei Überschreiten einer vorgegebenen Reißkraft übergangslos reißt, und
wobei der spröde verfestigte Molekülverband durch eine einachsige Dehnung in Dehnrichtung irreversibel aufgebrochen wird, jedoch quer zur Dehnrichtung erhalten bleibt und dadurch die Folie in Querrichtung versteift.

Die Skinlage der erfindungsgemäßen Laminatfolie zeigt ein sprödes Bruchverhalten, das dem Bruchverhalten von Duromeren vergleichbar ist. Bis zur Anwendung einer spezifischen Reißkraft besitzt das Material einen hohen Dehnungswiderstand. Unter Zugbeanspruchung dehnt sich das Material nicht oder nur wenig und reißt dann bei Überschreiten der vorgegebenen Reißkraft übergangslos. Das spröde Bruchverhalten kann durch die Mischungszusammensetzung der Skinlage oder durch eine Nachbehandlung des Coextrudats erzeugt werden. Die Nachbehandlung umfasst physikalische und mechanische Behandlungen. So bewirkt eine Wärmebehandlung unterhalb der Glastemperatur eines teilkristallinen Thermoplasten eine Versprödung des Kunststoffes. Ferner können die mechanischen Eigenschaften durch Verstecken geändert werden. Dabei besteht häufig ein Zusammenhang zwischen den mechanischen Eigenschaften und der molekularen Orientierung, die ihrerseits durch die Verstreckbedingungen (Temperatur, Geschwindigkeit, Verstreckgrad) bestimmt wird. In Orientierungsrichtung nimmt im Allgemeinen die Festigkeit des verstreckten Materials stark zu, während die Dehnbarkeit abnimmt.

Erfindungsgemäß wird das Laminat monoaxial unterhalb der Streckgrenze der Kernlage, jedoch mit einer Zugkraft oberhalb der Reißkraft F_{R} der Skinlage gedehnt. Dabei wird der versprödete Molekülverband der Skinlage in Dehnrichtung irreversibel aufgebrochen und bleibt quer zur Dehnrichtung erhalten. Es resultiert ein Material, das in bevorzugter Dehnungsrichtung um das zwei- oder mehrfache seiner Ursprungslänge gedehnt werden kann und in Querrichtung dazu eine relativ feste und unelastische Struktur aufweist. Gemäß einer bevorzugten Ausführung der Erfindung lässt sich die Skinlage bei einer Zugkraft, die man braucht, um die Kernlage um 100 % zu dehnen, in der bevorzugten Dehnungsrichtung um mindestens 50 % dehnen, wohingegen die Dehnung in Querrichtung bei Anwendung der gleichen Kraft weniger als 5 % beträgt.

Das erfindungsgemäße Laminat weist eine vorzugsweise einschichtige, jedoch optional auch mehrschichtige Kernlage auf, die dem Laminat im Wesentlichen die Elastizität verleiht. Die Kernlage ist ganzflächig auf einer oder auf ihren beiden Seiten mit einer Skinlage, welche die zuvor beschriebenen Eigenschaften aufweist, bedeckt. Im Rahmen der Erfindung liegt es, dass die Skinlage nicht vollflächig, sondern lediglich in Bereichen durch Verstreckung in Dehnrichtung aufgebrochen ist und folglich das Material lediglich in Bereichen eine hohe Elastizität in einer Achsrichtung aufweist. Elastische Bereiche und nicht elastische Bereiche sind optisch unterscheidbar.

Für die Kernlage sind Blockcopolymere, vorzugsweise Styrolisoprenstyrol- (SIS), Styrolbutadienstyrol- (SBS), Styrolethylenblockcopolymer- (SEBS) oder Polyether-Block-Amide-(PEBA) Blockcopolymere einsetzbar. Besonders vorteilhaft sind nicht wärmeschrumpfbare Polymere. Im Rahmen der Erfindung können ferner elastomere Polyurethane, Ethylencopolymere, z. B. Ethylen-Vinylacetate, Ethylen/Propylen-Copolymerelastomere oder Ethylen/Propylen/Dien-Terpolymer-Elastomere für die Kernlage verwendet werden. Es versteht sich, dass auch Mischungen der genannten Elastomere miteinander oder mit modifizierenden Nichtelastomeren eingesetzt werden können. Im Rahmen der Erfindung liegt es schließlich, die Kernschicht mit Tackfiern zu versetzen, um die Haftfähigkeit der elastomeren Kernschicht mit der Skinschicht zu erhöhen. Zu den Tackifiern gehören aliphatische oder aromatische Kohlenwasserstoff-Tackifier, Polyterpenharz-Tackifier und hydrierte klebrigmachende Harze. Bevorzugt sind aliphatische Kohlenwasserstoffharze.

Für die Skinlage eignen sich durch Nachbehandlung versprödete Polyolefine. Ferner können Mischungen aus Polyolefinen und Polystyrol, Mischungen aus Polyolefinen, Polystyrol und Ethylenvinylacetat und Mischungen aus Ethylenbutylacrylat und Polystyrol eingesetzt werden. Ferner kann die Skinlage Zusatzstoffe enthalten. Hierzu gehören u. a. Antistatika, Pigmente, Füllstoffe, Antihaftmittel, Wärmestabilisatoren, Photostabilisatoren und dergleichen.

Skinlage und Kernlage berühren sich nach der Coextrusion vollflächig und sind zumindest adhäsiv miteinander verbunden. Zusätzlich können auch Haftvermittlerschichten zwischen der Skinlage und der Kernlage vorgesehen werden.

Gegenstand der Erfindung ist auch ein Verfahren zur Herstellung einer monoaxial elastischen Laminatfolie, die eine Kernlage aus einem thermoplastischen Elastomer und mindestens eine Skinlage aus einem polyolefinischen Kunststoff aufweist. Erfindungsgemäß wird das Coextrudat zur Bildung einer versprödeten Molekülstruktur in der Skinlage bei einer Temperatur von 140 °C bis 155 °C in einer ersten Dehnrichtung einachsig in einem Verhältnis von 1:5 bis 1:10 verstreckt und anschließend unter Schrumpfung auf Zimmertemperatur abgekühlt. Durch erneutes einachsiges Recken quer zur ersten Dehnrichtung in einem Verhältnis zwischen 1:2,5 und 1:3,5 wird der Molekülverband in der Skinstruktur aufgebrochen, so dass sich das Laminat in der letztgenannten Reckrichtung dehnen lässt und in der ersten Dehnrichtung steif bleibt. Vorzugsweise wird ein dreischichtiges Coextrudat hergestellt, das auf beiden Seiten der Kernlage jeweils eine Skinlage aufweist. Die Skinlagen bestehen gemäß einer bevorzugten Ausführung der Erfindung aus einem Polypropylen-Homopolymer.

Im Folgenden wird die Erfindung anhand einer lediglich ein Ausführungsbeispiel darstellenden Zeichnung erläutert. Es zeigen schematisch
- Fig. 1: den Schichtenaufbau einer erfindungsgemäßen mono-axial elastischen Laminatfolie,
- Fig. 2: ein Kraft-Dehnungs-Diagramm für das Dehnungsverhalten der erfindungsgemäßen Laminatfolie in bevorzugter Dehnungsrichtung,
- Fig. 3: das Kraft-Dehnungs-Diagramm für das Dehnungsverhalten der Verbundfolie quer zur bevorzugten Dehnungsrichtung.

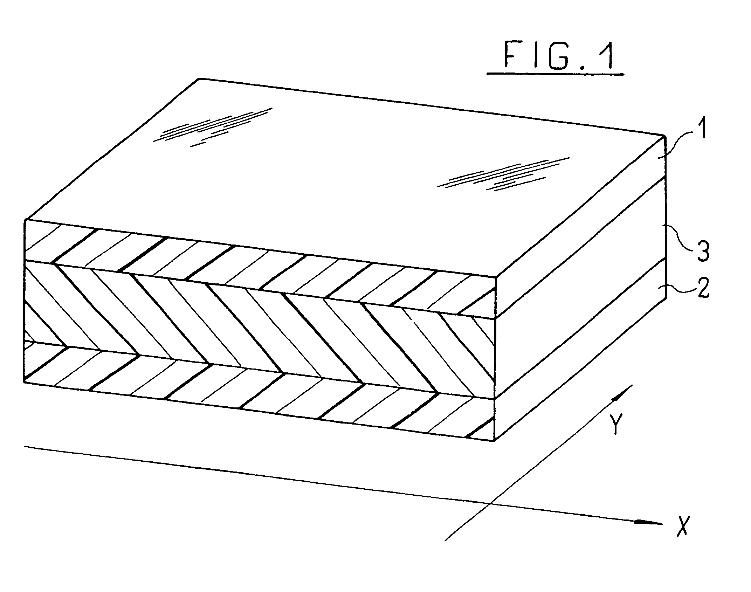

Der in Fig. 1 dargestellte Ausschnitt aus einer erfindungsgemäß hergestellten monoaxial elastischen Laminatfolie ist stark vergrößert. Die Folie weist eine Kernlage 3 aus einem thermoplastischen Elastomer und beidseitig angeordnete sowie zusammen mit der Kernlage 3 coextrudierte Skinlagen 1, 2 auf. Die Skinlagen 1, 2 bestehen aus einem thermoplastischen Kunststoff mit einem spröde verfestigten Molekülverband, der beim Extrudieren und/oder durch eine Nachbehandlung entsteht. Die Skinlagen 1, 2 weisen ein Dehnungsverhalten auf, welches einem Duroplasten ähnlich ist. Unter Anwendung einer Dehnkraft F dehnt sich das Material nicht oder nur wenig, so lange eine vorgegebene Reißkraft F_{R} nicht überschritten wird. Bei Überschreiten der Reißkraft reißt das Material übergangslos. Wird die in Fig. 1 dargestellte Laminatfolie mit einer Kraft F in Richtung X gedehnt, so wird die elastische Kernlage ohne weiteres dieser Dehnkraft folgen und bei Aufheben der Kraft im Wesentlichen wieder in die vorherige Konfiguration zurückkehren. Wird bei der Dehnung die spezifische Reißkraft F_{R} der Skinlagen überschritten, so bilden sich charakteristische Risse und Spalten in den Skinlagen 1, 2, die im mikroskopischen Maßstab an Gletscherspalten erinnern. In diesen Bereichen ist die Molekülstruktur bzw. der versprödete Molekülverband irreversibel aufgebrochen, so dass bei erneuten Dehnungen geringe Kräfte ausreichend sind, um die Molekülstruktur aufs Neue aufzubrechen. In der Querrichtung zur bevorzugten Dehnungsrichtung (Koordinate Y) bleibt dagegen der versprödete Molekülverband erhalten, so dass die Laminatfolie in Y-Richtung eine relativ feste und unelastische Struktur behält.

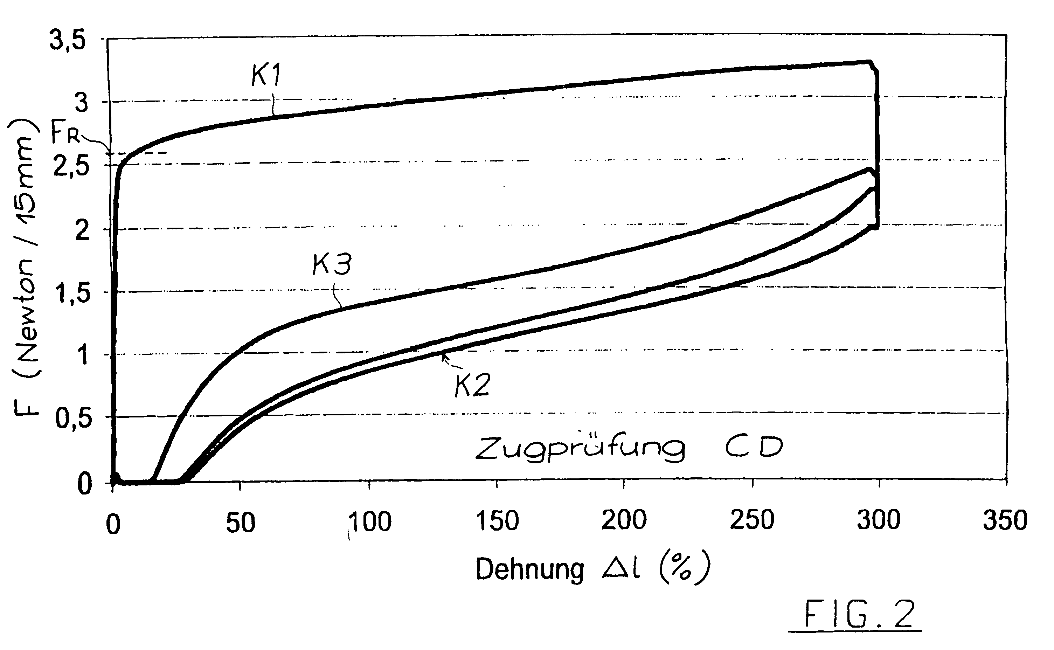

In Fig. 2 ist das beschriebene Verhalten der Laminatfolie für die X-Richtung in einem Kraft-Längenänderungs-Diagramm dargestellt. Die Zugkraft F ist auf der Ordinate als Kraft in Newton (N), die auf einen Streifen von 15 mm Breite wirkt, definiert. Die Abszisse zeigt die Dehnung Δl in %. Bei erstmaliger Dehnung ist eine hohe Zugkraft erforderlich, um eine geringe Längenänderung Δl hervorzurufen (Kurve K1). Sobald die Zugkraft eine durch den versprödeten Molekülverband der Skinlagen definierte Reißkraft F_{R} überschreitet, reißt der Molekülverband und man beobachtet einen charakteristischen Kurvenverlauf, bei dem eine geringe Kraft F eine starke weitere Dehnung verursacht. Wird nach dem Überschreiten der Reißkraft F_{R} die Zugkraft F aufgehoben, so kehrt die Folie im Wesentlichen in die Ursprungskonfiguration zurück. Die Rückstellung erfolgt entsprechend der Entlastungskurve K2. Bei erneuter Dehnung stellt sich ein Kurvenverlauf entsprechend Kurve K3 ein. Die Elastizität der Verbundfolie wird in der bevorzugten Dehnungsrichtung, also in Richtung X, im Wesentlichen durch das Elastizitätsverhalten der Kernlage 3 bestimmt. Das Material lässt sich um ein Mehrfaches seiner Ursprungslänge dehnen. Nach der ersten Dehnung verhält sich die Laminatfolie in X-Richtung wie ein typisches Elastomer, ebenso nach der zweiten und jeder weiteren Dehnung.

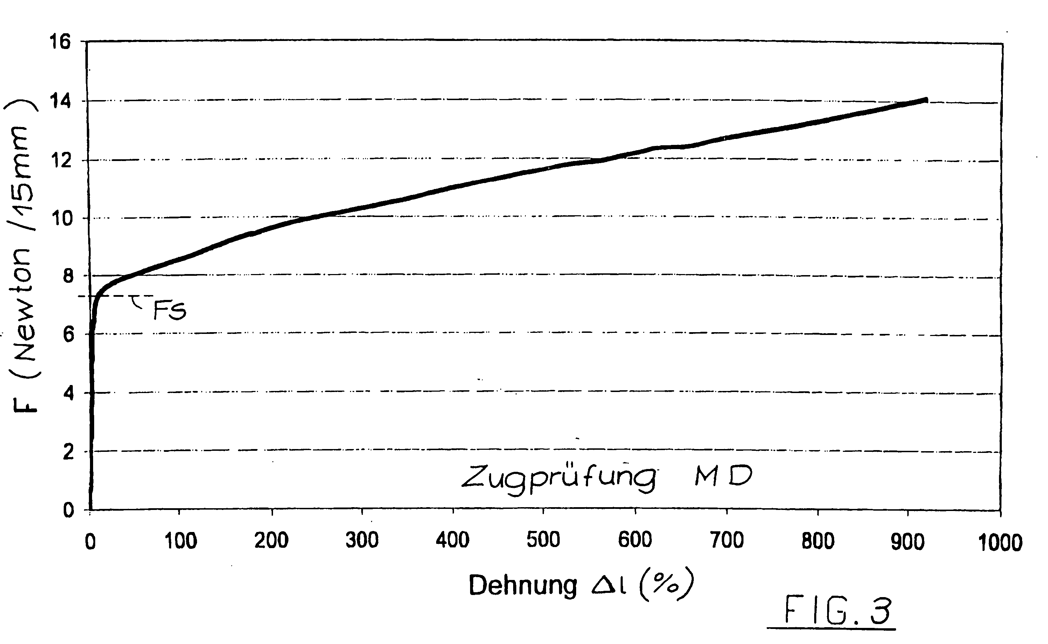

Die Fig. 3 zeigt das Kraft/Dehnungsverhalten in Y-Richtung, also quer zu der bevorzugten Dehnungsrichtung X. Die Y-Richtung entspricht im Ausführungsbeispiel der Maschinenlaufrichtung MD. Bis zu einem Schwellenwert F_{S} tritt in Y-Richtung praktisch keine Dehnung ein. Dieser Schwellenwert F_{S} ist in Grenzen, die dem Kunststofffachmann bekannt sind, einstellbar. Einer vergleichenden Betrachtung der Fig. 2 und 3 entnimmt man, dass die erfindungsgemäße Laminatfolie in X-Richtung um ein Mehrfaches ihrer Ursprungslänge gedehnt werden kann, während sie in Y-Richtung formstabil ist und im Wesentlichen dehnungsfrei in Y-Richtung wirkende Kräfte bis zu einem Schwellenwert F_{S} aufnimmt.

Dem Fachmann stehen verschiedene Möglichkeiten zur Verfügung, um die Skinlagen so zu gestalten, dass in diesen ein spröde verfestigter Molekülverband vorhanden ist, der in Dehnrichtung durch Überschreiten der Reißkraft F_{R} irreversibel aufgebrochen werden kann und dabei quer zur Dehnrichtung erhalten bleibt. Bevorzugt sind Skinlagen, die nach einer erstmaligen Dehnung durch folgende Eigenschaften charakterisiert sind. Sie dehnen sich bei einer Zugkraft, die man braucht, um die elastomere Kernlage um 100 % zu dehnen, in einer Richtung um mindestens 50 %, in der anderen Richtung bei der gleichen Kraft um vorzugsweise weniger als 5 %.

### Beispiel 1:

Auf einer Dreischicht-Coextrusionsanlage wurde eine dreischichtige Laminatfolie mit folgendem Aufbau coextrudiert. Die Skinlagen bestanden jeweils aus Polypropylen-Homopolymer der Dichte 0,900 g/cm³ mit einem Schmelzindex 2 g/10 min bei 230 °C und 2,16 kg. Die Schichten wurden auf 24 µm Dicke eingestellt.

Die Kernlage bestand aus einem extrusionsfähigen Styrol-Blockcopolymer, nämlich einem Styrolisoprenstyroltriblock mit einem Styrolanteil von 18 Gew.-% und einem Schmelzindex von 7 g/10 min bei 200 °C und 5 kg. Die Dicke der elastomeren Kernlage betrug 400 µm. Nach Ausformung und Abkühlung der Folie wurde sie in einem Walzenreckwerk bei einer Temperatur von 148 °C monoaxial in Maschinenlaufrichtung in einem Verhältnis 1:7 verstreckt und anschließend in einem Temperierwerk abgekühlt, wobei sie um 20 % der Ausformungslänge schrumpfte. Im dritten Prozessschritt wurde die monoaxial orientierte Folie bei Raumtemperatur in einem Verhältnis 1:3 quer zur Maschinenlaufrichtung verstreckt und anschließend wieder entspannt.

Die auf diese Weise hergestellte Laminatfolie besaß eine Dicke von 80 µm. Sie war in Maschinenlaufrichtung fest und formstabil und besaß quer zur Maschinenlaufrichtung eine hohe Elastizität. Bei einer Zugprüfung wurde in Maschinenlaufrichtung bei einer Kraft von 5 N eine Dehnung von weniger als 3 % gemessen. In Querrichtung dehnte sich das Material bei der gleichen Kraft um 120 %.

### Beispiel 2:

Auf einer Dreischicht-Blasfolienanlage wurde eine Folie extrudiert, die in ihren beiden außenseitigen Skinlagen eine Mischung aus Polypropylen und 30 Gew.-% Talkum enthielt. Die Korngröße des Talkums lag unterhalb 0,5 µm. Die Dicke der Außenschichten betrug jeweils 5 µm. Die Kernlage der Folie bestand aus einer Mischung aus einem Styrolblockcopolymer (SIS-Triblock mit einem Styrolanteil von 18 Gew.-%) und Ethylenvinylacetat mit 18 Gew.-%, so dass sich ein Schmelzindex von 2 g/10 min bei 190 °C, 2,16 kg ergab. Die Dicke der Kernlage betrug 60 µm.

In einem zweiten Produktionsschritt wurde die hergestellte Folie bei einer Temperatur von 15 °C in Querrichtung kaltverstreckt, und zwar mit einem Reckverhältnis von 1:5. Nach der Entspannung lag ein Material vor, das sich sehr stabil in Maschinenlaufrichtung verhielt und eine hohe Elastizität in Querrichtung dazu aufwies. Bei der Prüfung mit einer Zug-Prüfmaschine wurde bei 3 N/50 mm in Querrichtung eine Dehnung von 185 % erreicht. Bei der gleichen Kraft in Maschinenlaufrichtung dehnte sich die Folie nur um etwa 3 %.

### Beispiel 3:

Auf einer Dreischicht-Coextrusionsanlage wurde eine mehrschichtige Folie mit folgendem Aufbau coextrudiert. Die Kernschicht bestand aus einem thermoplastischen Polyurethan mit einer Shore-Härte nach DIN 53505 von 70 Shore A. Die Skinlagen bestanden jeweils aus einer Mischung aus HDPE (High Density-Polyethylen) mit gleichen Anteilen an Polystyrol und Ethylvinylacetat. Das HDPE wies eine Dichte von 0,960 g/cm³ und einen Schmelzindex von 8 g/10 min bei 190 °C, 2,16 kg auf. Das Polystyrol war ein Homopolymer mit einer Schmelzflussrate von 18 g/10 min bei 200 °C und 5 kg. Das Ethylvinylacetat enthielt 25 % Vinylacetat und hatte einen Schmelzindex von 3 g/10 min bei 190 °C und 2,16 kg. Die Gesamtdicke der Folie betrug 100 um, wobei das Verhältnis der Schichten 1:8:1 betrug. Die hergestellte Folie war in Maschinenlaufrichtung sehr stabil. In Querrichtung ließ sie sich von Hand leicht verstrecken. Danach verhielt sie sich in Querrichtung elastisch.

### Beispiel 4:

Es wurde eine Folie extrudiert, die sich aus drei Schichten zusammensetzte. Der Kern der Folie bestand aus einem Polyethylen-Block-Amid (PEBA), die Außenschichten aus einer Mischung (Blend) aus HDPE, dem 5 Gew.-% Maleinsäureanhydrid aufgepropft war und aus 20 Gew.-% Polystyrol mit einem Zusatz von 0,5 Gew.-% Talkum. Polyether-Block-Amide sind u.a. unter dem Handelsnamen PEBAX (ELF ATOFINA) bekannt. HDPE gepropft mit Maleinsäureanhydrid wurde von der Firma DuPont hergestellt. Das Talkum hatte eine mittlere Körnung von 5 µm. Die Gesamtdicke der Folie betrug 50 µm, wobei die Außenschichten jeweils 5 µm und der Kern 40 µm dick waren.

### Beispiel 5:

In der gleichen Dickenverteilung wie in Beispiel 4 wurde eine Laminatfolie coextrudiert. Für den Kern der Folie wurde ein Polyesterelastomer der Firma DSM (Handelsname Arnitel) eingesetzt. Die Außenschichten setzten sich aus einem Blend aus Ethylbutylacrylat (60 Gew.-%), Polystyrol (39,5 Gew.-%) und Talkum (0,5 Gew.-%) zusammen. Die Gesamtdicke der Folie betrug 70 µm; die Außenschichten waren jeweils 6 µm dick. Das Ethylbutylacrylat hatte einen molekularen Anteil von 28 % Butylacrylat und einen Schmelzindex von 4 g/10 min bei 190 °C und 2,16 kg. Polystyrol und Talkum hatten die gleiche Charakteristik wie in Beispiel 4.

### Beispiel 6:

Auf einer Dreischicht-Blasfolienanlage wurde eine 35 µm dicke Folie extrudiert. Der Kern der Folie war 30 um dick und bestand aus einem mit Metallocenkatalysatoren hergestellten Copolymer aus Ethylen und Octen. Die Dichte des Copolymers betrug 0,870 g/cm³. Es wurde ein Schmelzindex 1 g/10 min bei 190 °C und 2,16 kg gemessen. Die Außenschichten der Folie bestanden aus einem Blend aus 75 Gew.-% Polypropylen, 0,8 Gew.-% Talkum und 24,2 Gew.-% Polystyrol. Beim Polypropylen handelte es sich um ein Homopolymer mit einer Dichte von 0,910 g/cm³ und einem Schmelzindex von 8 g/10 min bei 230 °C und 2,16 kg.

### Beispiel 7:

Auf einer Flachfolienanlage wurde eine 80 µm dicke Folie extrudiert. Für den Kern der Folie wurde ein Blend aus Styrolbutadienstyrolblockcopolymer (SBS) und Styrolisoprentyrolblockcopolymer (SIS) eingesetzt. Der Schmelzindex des Blends betrug 6 g/10 min bei 200 °C und 5 kg. Für die Außenschichten kam ein Blend aus HDPE, Polystyrol und 20 Gew.-% Ethylvinylacetat zum Einsatz. Die Außenschichten waren jeweils 6 um dick, der Kern 68 µm. Das hergestellte Material war in Maschinenlaufrichtung sehr stabil und ließ sich erst bei einer Kraft von mehr als 6 N/15 mm dehnen. In Querrichtung ließ sich die Folie schon bei einer Kraft von 3,3 N/15 mm um 300 % verdehnen. Nach der ersten Verdehnung war nur eine Kraft von 2,5 N/15 mm notwendig, um die gleiche 300%ige Dehnung zu erzielen.

### Beispiel 8:

Eine nach Beispiel 7 hergestellte Folie wurde in einem Reckrahmen um 300 % in Querrichtung verstreckt und anschließend entlastet. Als Resultat lag eine Folie vor, die in Querrichtung sehr elastisch war und weiterhin wenig dehnfähig in Maschinenrichtung. Bei Einsatz der gleichen Kraft, die in Querrichtung eine Dehnung von 300 % bewirkte, wurde in Maschinenrichtung nur eine Verdehnung von etwa 5 % festgestellt.

## Patentansprüche

1. Monoaxial elastische Laminatfolie mit einer Kernlage (3) aus einem thermoplastischen Elastomer und mindestens einer zusammen mit der Kernlage (3) koextrudierten Skinlage (1, 2),
wobei die Skinlage (1, 2) aus einem thermoplastischen Kunststoff mit einem spröde verfestigten Molekülverband besteht, der sich unter Anwendung einer Dehnkraft nur wenig dehnen kann und bei Überschreiten einer vorgegebenen Reißkraft übergangslos reißen kann, und
wobei der spröde verfestigte Molekülverband durch eine einachsige Dehnung in Dehnrichtung irreversibel aufgebrochen wird, jedoch quer zur Dehnrichtung erhalten bleibt und **dadurch** die Folie in Querrichtung versteift.

2. Laminatfolie nach Anspruch 1, **dadurch gekennzeichnet, dass** die Skinlage (1, 2) sich bei einer Zugkraft, die man braucht, um die Kernlage (3) um 100 % zu dehnen, in der bevorzugten Dehnrichtung um mindestens 50 % sowie bei Anwendung der gleichen Kraft in Querrichtung um weniger als 5 % dehnt.

3. Laminatfolie nach Anspruch 1 oder 2, **dadurch gekennzeichnet, dass** die Skinlage (1, 2) nicht vollflächig sondern lediglich in Bereichen durch Verstreckung in Dehnrichtung aufgebrochen ist.

4. Laminatfolie nach einem der Ansprüche 1 bis 3, **dadurch gekennzeichnet, dass** die Kernlage (3) aus einem Blockcopolymer, ausgewählt aus der Gruppe der SIS-, SBS-, SEBS- oder PEBA-Blockcopolymere, oder aus einem elastomeren Polyurethan, oder aus einem elastomeren Ethylen-Copolymer besteht.

5. Laminatfolie nach einem der Ansprüche 1 bis 4, **dadurch gekennzeichnet, dass** die Skinlage (1, 2) aus einem durch Nachbehandlung versprödeten Polyolefin oder einer Mischung aus Polyolefin und Polystyrol oder einer Mischung aus Polyolefin, Polystyrol und Ethylvinylacetat oder einer Mischung aus Ethylbutylacrylat und Polystyrol besteht.

6. Laminatfolie nach einem der Ansprüche 1 bis 5, **dadurch gekennzeichnet, dass** die Skinlage (1, 2) Zusätze eines anorganischen Füllstoffes enthält.

7. Verfahren zur Herstellung einer monoaxial elastischen Laminatfolie,
wobei ein Coextrudat mit einer Kernlage (3) aus einem thermoplastischen Elastomer und mindestens einer polyolefinischen Skinlage (1, 2) hergestellt wird,
wobei das Coextrudat zur Bildung eines spröde verfestigten Molekülverbandes in der Skinlage (1, 2) bei einer Temperatur zwischen 140 °C und 155 °C in einer ersten Dehnrichtung einachsig in einem Verhältnis von 1:5 bis 1:10 verstreckt sowie anschließend unter Schrumpfung auf Zimmertemperatur abgekühlt wird und
wobei durch erneutes einachsiges Recken quer zur ersten Dehnrichtung in einem Verhältnis zwischen 1:2,5 bis 1:3,5 der Molekülverband in der Skinlage (1, 2) aufgebrochen wird, so dass sich das Laminat in der letztgenannten Reckrichtung dehnen lässt und in der ersten Dehnrichtung steif bleibt.

8. Verfahren nach Anspruch 7, **dadurch gekennzeichnet, dass** die Skinlage (1, 2) aus einem Polypropylen-Homopolymer besteht.

9. Verfahren nach Anspruch 7 oder 8, **dadurch gekennzeichnet, dass** ein dreischichtiges Coextrudat hergestellt wird, das auf beiden Seiten der Kernlage (3) jeweils eine Skinlage (1, 2) aus einem polyolefinischen Kunststoff aufweist.

## Claims

1. Monoaxially elastic laminate film comprising a core layer (3) made of a thermoplastic elastomer and at least one skin layer (1, 2) which is coextruded together with the core layer (3),
wherein the skin layer (1, 2) is made of a thermoplastic plastic with a brittle consolidated molecular structure which can expand only slightly when an expansion force is applied and may tear without any transition when a predefined tear force is exceeded, and
wherein the brittle consolidated molecular structure is irreversibly broken up by monoaxial expansion in the expansion direction but remains intact transversely to the expansion direction and as a result the film is stiffened in the transverse direction.

2. Laminate film according to Claim 1, **characterized in that**, at a tensile force which is required to expand the core layer (3) by 100%, the skin layer (1, 2) expands in the preferred expansion direction by at least 50% and expands by less than 5% when the same force is applied in the transverse direction.

3. Laminate film according to Claim 1 or 2, **characterized in that** the skin layer (1, 2) is broken up not over its entire surface but rather only in some regions when it is stretched in the expansion direction.

4. Laminate film according to any of Claims 1 to 3, **characterized in that** the core layer (3) is made of a block copolymer selected from the group consisting of SIS, SBS, SEBS or PEBA block copolymers, or of an elastomeric polyurethane or of an elastomeric ethylene copolymer.

5. Laminate film according to any of Claims 1 to 4, **characterized in that** the skin layer (1, 2) consists of a polyolefin made brittle by post-treatment or a mixture of polyolefin and polystyrene or a mixture of polyolefin, polystyrene and ethyl vinyl acetate or a mixture of ethyl butyl acrylate and polystyrene.

6. Laminate film according to any of Claims 1 to 5, **characterized in that** the skin layer (1, 2) contains additions of an inorganic filler.

7. Method of producing a monoaxially elastic laminate film,
wherein a coextrudate is produced which comprises a core layer (3) made of a thermoplastic elastomer and at least one polyolefin skin layer (1, 2),
wherein the coextrudate is stretched monoaxially in a first expansion direction at a temperature between 140°C and 155°C in a ratio of 1:5 to 1:10 and then is cooled to room temperature, with shrinkage, in order to form a brittle consolidated molecular structure in the skin layer (1, 2), and
wherein, by renewed monoaxial stretching transversely to the first expansion direction in a ratio between 1:2.5 and 1:3.5, the molecular structure in the skin layer (1, 2) is broken up so that the laminate can expand in the last-mentioned stretching direction and remains stiff in the first expansion direction.

8. Method according to Claim 7, **characterized in that** the skin layer (1, 2) is made of a polypropylene homopolymer.

9. Method according to Claim 7 or 8, **characterized in that** a three-layer coextrudate is produced which has in each case a skin layer (1, 2) made of a polyolefin plastic on either side of the core layer (3).

## Revendications

1. Feuille stratifiée élastique mono-axialement, comprenant une couche de coeur (3) composée d'un élastomère thermoplastique et au moins une couche de peau (1, 2) co-extrudée avec la couche de coeur (3),
la couche de peau (1, 2) se composant d'une matière thermoplastique avec un édifice moléculaire fragilisé, qui ne peut que s'allonger de peu sous l'application d'une force d'allongement et peut se rompre sans transition lors d'un dépassement par le haut d'une force de rupture prédéfinie, et
l'édifice moléculaire fragilisé étant rompu de manière irréversible dans la direction d'allongement par un allongement uni-axial, mais restant maintenu transversalement à la direction d'allongement et rigidifiant de ce fait la feuille dans la direction transversale.

2. Feuille stratifiée suivant la revendication 1, **caractérisée en ce que** la couche de peau (1, 2) s'allonge sous une contrainte de traction, requise pour allonger la couche de coeur (3) de 100%, d'au moins 50% dans la direction d'allongement préférentielle ainsi que de moins de 5% dans la direction transversale lors de l'application de la même force.

3. Feuille stratifiée suivant l'une des revendications 1 et 2, **caractérisée en ce que** la couche de peau (1, 2) n'est pas rompue sur toute sa surface mais uniquement dans des zones en étirement dans la direction d'allongement.

4. Feuille stratifiée suivant l'une des revendications 1 à 3, **caractérisée en ce que** la couche de coeur (3) se compose d'un copolymère en bloc, sélectionné dans le groupe des copolymères en bloc SIS, SBS, SEBS ou PEBA, ou d'un polyuréthanne élastomère, ou d'un copolymère d'éthylène élastomère.

5. Feuille stratifiée suivant l'une des revendications 1 à 4, **caractérisée en ce que** la couche de peau (1, 2) se compose d'une polyoléfine fragilisée par post-traitement ou d'un mélange de polyoléfine et de polystyrène ou d'un mélange de polyoléfine, polystyrène et éthylvinylacétate ou d'un mélange d'éthylbutylacrylate et de polystyrène.

6. Feuille stratifiée suivant l'une des revendications 1 à 5, **caractérisée en ce que** la couche de peau (1, 2) comporte des additifs d'une charge inorganique.

7. Procédé de préparation d'une feuille stratifiée élastique mono-axialement,
dans lequel est préparé un produit co-extrudé comportant une couche de coeur (3) en un élastomère thermoplastique et au moins une couche de peau (1, 2) poly-oléfinique,
le produit co-extrudé, pour former un édifice moléculaire fragilisé dans la couche de peau (1, 2), est étiré sous une température comprise entre 140°C et 155°C dans une première direction d'allongement uni-axiale, dans un rapport de 1 :5 à 1 :10, puis est refroidi avec retrait à température ambiante, et
par un nouvel étirement uni-axial transversalement à la première direction d'allongement dans un rapport entre 1 : 2,5 à 1 :3,5, l'édifice moléculaire dans la couche de peau (1, 2) est rompu, de sorte que le stratifié peut s'allonger dans la dernière direction d'étirement citée et reste rigide dans la première direction d'allongement.

8. Procédé suivant la revendication 7, **caractérisé en ce que** la couche de peau (1, 2) se compose d'un homopolymère de polypropylène.

9. Procédé suivant l'une des revendications 7 et 8, **caractérisé par** la préparation d'un produit co-extrudé à trois couches, qui comporte sur chacun des deux côtés de la couche de coeur (3) une couche de peau (1, 2) en une matière plastique poly-oléfinique.
